# EUROPEAN PATENT APPLICATION

(11) **EP 0 913 420 A2**
(43) Date of publication of application: **06.05.1999**
(21) Application number: 98120538.8
(22) Date of filing: 30.10.1998
(51) Int. Cl.: C08G 77/60, C09D 183/06

(54) **Silphenylenesilalkylene polymer, methods for preparing same, and coating composition**

(30) Priority: 31.10.1997 JP 316000/97
(71) Applicant: Dow Corning Toray Silicone Company, Ltd., Chiyoda-ku, Tokyo 100-0005 (JP)
(72) Inventor: Kobayashi, Hideki Dow Corning Toray, Ichihara-shi, Chiba Prefecture (JP); Hayashi, Masayuki Dow Corning Toray, Ichihara-shi, Chiba Prefecture (JP); Masatomi, Tooru Dow Corning Toray, Ichihara-shi, Chiba Prefecture (JP)
(74) Representative: Patentanwälte Sternagel & Fleischer

(57) **Abstract**

A silphenylenesilalkylene polymer containing principal chains having the general formula: 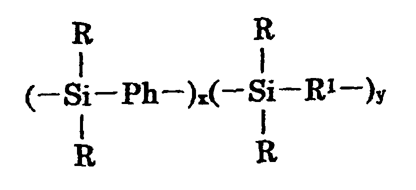 wherein each R is independently a monovalent hydrocarbon group having 1 to 10 carbon atoms, with the proviso that at least 20% of the R groups are phenyl; R¹ is an alkylene group or an alkyleneoxyalkylene group having 2 to 10 carbon atoms; Ph is a substituted or unsubstituted para-phenylene ring; and x and y are integers having a value of at least 1; and wherein the polymer has a weight average molecular weight of at least 1,000 and is a solid at 30°C.

## Description

The present invention relates to a silphenylenesilalkylene polymer, to methods of preparing same, and to a coating composition containing the polymer, which forms a high-hardness coating film having superior water-repellent properties.

Coating materials consisting, for example, mainly of diorganopolysiloxanes, are known as silicone type coating materials. However, diorganopolysiloxanes are ordinarily liquid at room temperature; accordingly, such coating materials must be cured by adding a curing catalyst, etc., in order to form a coating film.

Meanwhile, coating materials consisting chiefly of organopolysiloxane resins which are solid at room temperature are also known. For example, such coating materials include a composition which consists of an organopolysiloxane resin and two types of alkoxysilanes, which is cured at room temperature (see Japanese Patent Application Kokai No. 51-148749); and a composition which consists of an organopolysiloxane resin, an alpha,omega-dihydroxydiorganosiloxane and an organosilane, which forms a water-repellent cured coating film (see Japanese Patent Application Kokai No. 55-48245). However, the curability of these compositions is inadequate; furthermore, when the viscosity of these compositions is increased, the compositions tend to gel. Moreover, multiple coatings are required in order to form a thick coating film with a high hardness.

The present inventors conducted diligent research in order to eliminate the abovementioned drawbacks. This research led to the perfection of the present invention.

The present invention is directed to a silphenylenesilalkylene polymer containing principal chains having the general formula: 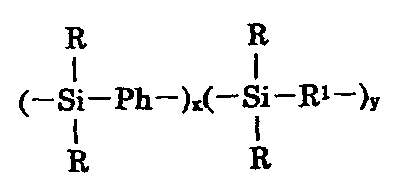 wherein each R is independently a monovalent hydrocarbon group having 1 to 10 carbon atoms, with the proviso that at least 20% of the R groups are phenyl; R¹ is an alkylene group or an alkyleneoxyalkylene group having 2 to 10 carbon atoms; Ph is a substituted or unsubstituted para-phenylene ring; and x and y are integers having a value of at least 1; and wherein the polymer has a weight average molecular weight of at least 1,000 and is a solid at 30°C.

The present invention is also directed to methods of preparing the above-mentioned silphenylenesilalkylene polymer and to a coating composition containing same.

The silphenylenesilalkylene polymer comprising the principal component of the coating composition of the present invention is a polymer containing principal chains having the general formula: 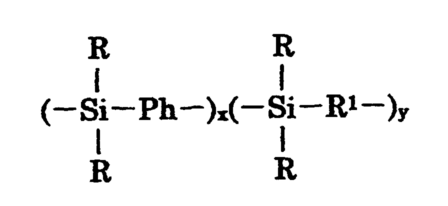 In the above formula, R indicates a substituted or unsubstituted monovalent hydrocarbon group with 1 to 10 carbon atoms. Concrete examples of such groups include alkyl groups such as methyl, ethyl, propyl, butyl, pentyl, and hexyl groups, etc.; aryl groups such as phenyl, tolyl and xylyl, etc.; aralkyl groups such as benzyl and phenethyl, etc.; and fluorinated hydrocarbon groups such as trifluoropropyl, nonafluorohexyl, and heptadecafluorooctyl, etc. Furthermore, at least 20% of the groups expressed by R are phenyl groups; the percentage of phenyl groups is preferably in the range of 20 to 80 mol %, and more preferably in the range of 20 to 50 mol %. R¹ indicates an alkylene group or alkyleneoxyalkylene group with 2 to 10 carbon atoms. Examples of alkylene groups which can be used include linear or branched alkylene groups. Concrete examples of groups which can he used include ethylene, methylethylene, ethylethylene, propylethylene, butylethylene, propylene, butylene, 1-methylpropylene, pentylene, hexylene, heptylene, octylene, nonylene, and decylene. Among these groups, ethylene, propylene, butylene, and hexylene groups are especially desirable. Furthermore, examples of alkyleneoxyalkylene groups include ethyleneoxypropylene and ethyleneoxybutylene. Ph indicates a substituted or unsubstituted para-phenylene ring; concrete examples include unsubstituted para-phenylene, 2-methyl-1,4-phenylene and 2-methoxy-1,4-phenylene. Among these, unsubstituted para-phenylene is especially desirable. x and y are integers greater than or equal to 1.

The silphenylenesilalkylene polymer of the present invention is a solid at room temperature. Furthermore, the weight average molecular weight of this polymer is 1,000 or greater, and is preferably in the range of 10,000 to 1,000,000.

A preferable silphenylenesilalkylene polymer according to the present invention contains principal chains having the general formula: 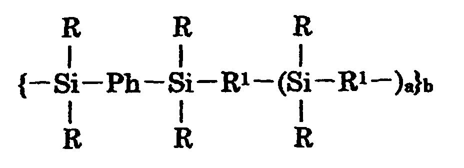 wherein R, R¹ and Ph have the same meanings as described above; a is 0 or 1; and b is an integer greater than or equal to 1. Ordinarily, a polymer expressed by the general formula: 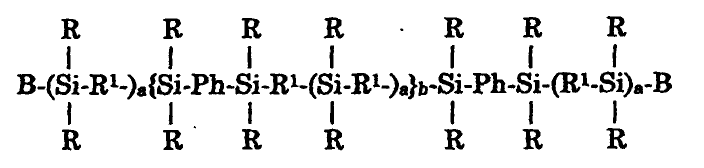 is used. In the above formula, R, R¹, Ph, a and b have the same meanings as described above. B indicates a hydrogen atom, a hydroxy group, or an alkenyl group or alkenyloxyalkylene group with 2 to 10 carbon atoms. Examples of alkenyl groups include vinyl, allyl, butenyl, hexenyl, and octenyl. Examples of alkenyloxyalkylene groups include vinyloxyethylene, vinyloxypropylene, allyloxyethylene, allyloxypropylene, and allyloxybutylene groups. Among these groups, hydrogen atoms and alkenyl groups are especially desirable.

Polymers expressed by the formulae shown below may be cited as examples of silphenylenesilalkylene polymers which can be used in the present invention. In the following formulae, Me indicates a methyl group, Pr indicates a propyl group, C₆H₅ indicates a phenyl group, Vi indicates a vinyl group, and C₃H₅ indicates an allyl group.

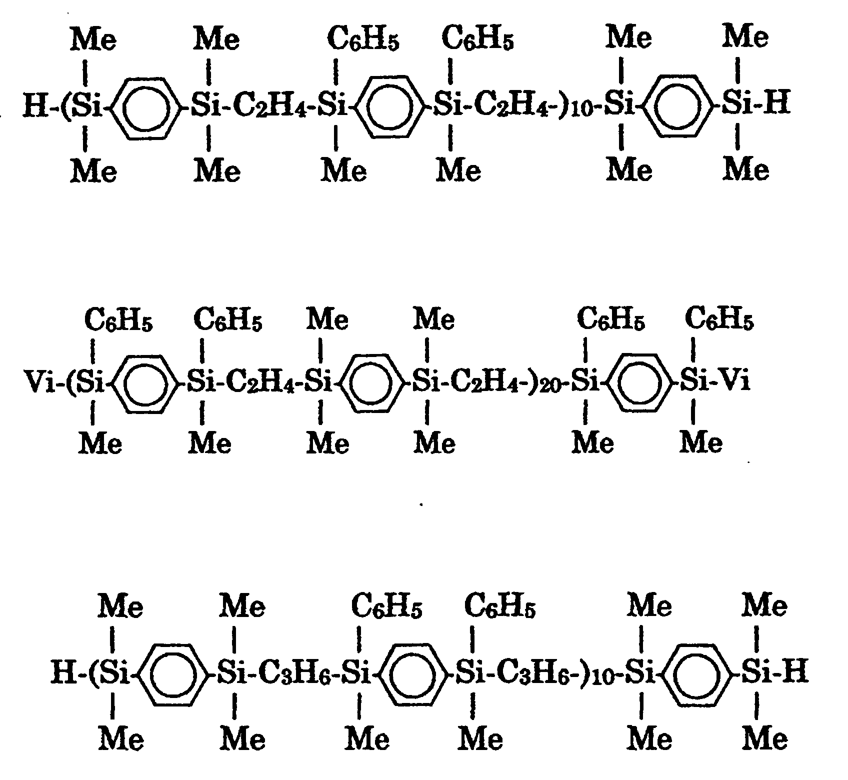

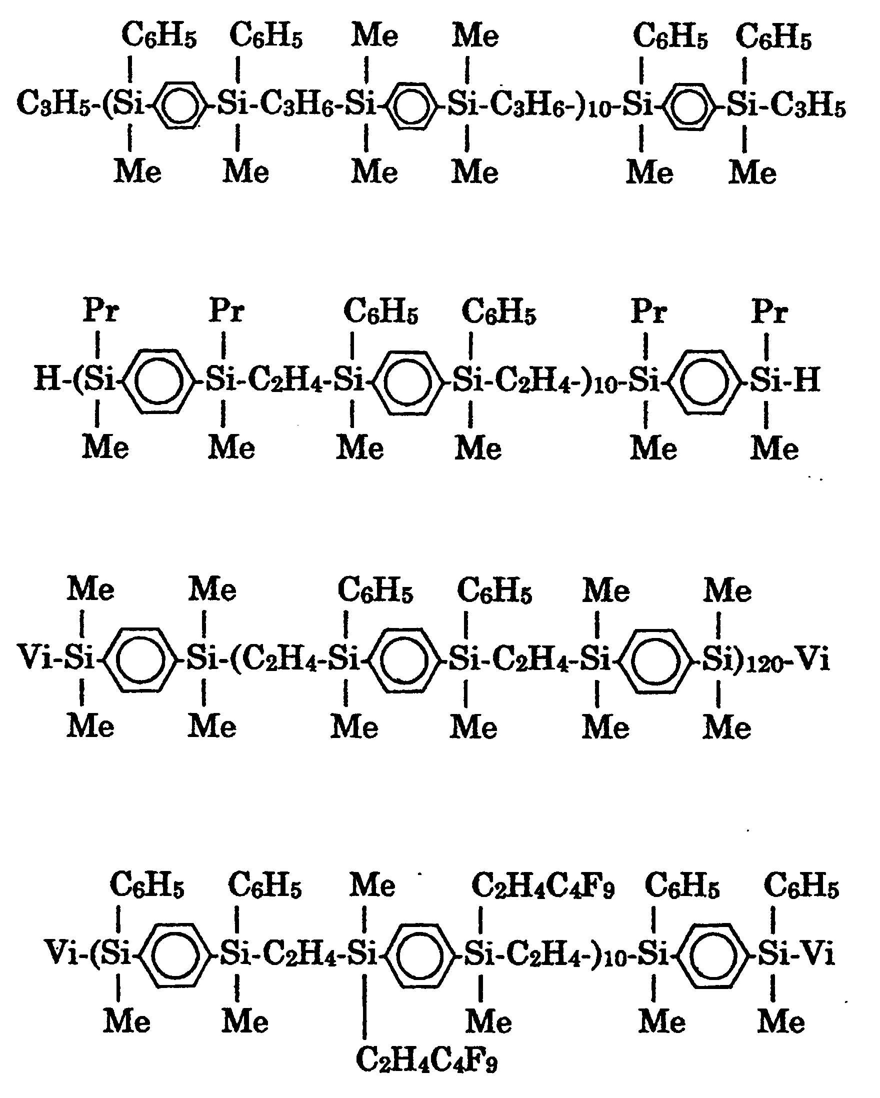

Such silphenylenesilalkylene polymers used in the present invention can be prepared by the hydrosilylation polymerization of a disilphenylene expressed by the formula: 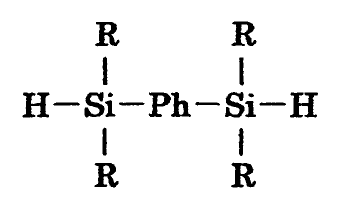 and a silicon compound expressed by the formula: 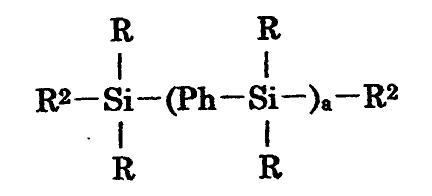 in the presence of a hydrosilylation reaction catalyst such as a platinum catalyst, rhodium catalyst, palladium catalyst or organic peroxide; wherein R, Ph, and a are defined above; and R² is an alkenyl group or alkenyloxyalkylene group, an unsaturated aliphatic hydrocarbon with 2 to 10 carbon atoms which has one carbon-carbon triple bond, an unsaturated aliphatic hydrocarbon with 3 to 10 carbon atoms which has two carbon-carbon double bonds, or a dialkenyl ether with 4 to 10 carbon atoms which has two carbon-carbon double bonds.

In addition, such polymers can also be prepared by a method in which a disilphenylene expressed by the formula: 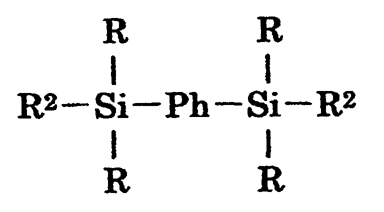 wherein R, Ph, and R² are as defined above, or a unsaturated aliphatic hydrocarbon with 2 to 10 carbon atoms which has one carbon-carbon triple bond, or an unsaturated aliphatic hydrocarbon with 3 to 10 carbon atoms which has two carbon-carbon double bonds, or a dialkenyl ether with 4 to 10 carbon atoms which has two carbon-carbon double bonds; and a silicon compound expressed by the formula: 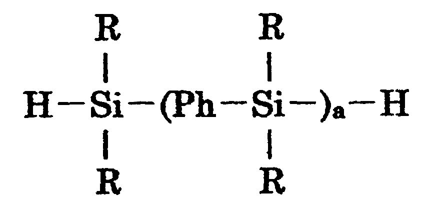 wherein R, Ph, and are defined above, are subjected to hydrosilylation polymerization in the same manner as described above.

Platinum type catalysts are desirable as hydrosilylation reaction catalysts, since such catalysts conspicuously accelerate addition polymerization. Concrete examples of such catalysts include platinum black, platinum supported on finely powdered silica, platinum supported on powdered carbon, chloroplatinic acid, alcohol solutions of chloroplatinic acid, complexes of platinum and vinylsiloxane, and complexes of platinum and olefins. The amount added is a catalytic amount, and there are no particular restrictions on this amount; however, it is desirable that the amount added be in the range of 0.1 to 500 parts by weight per 1,000,000 parts by weight of the total of the abovementioned disilphenylene and silicon compound. Furthermore, in cases where a platinum type catalyst is used, it is desirable that the platinum be adsorbed and removed by adding active carbon or silica, etc., following the polymerization reaction.

Moreover, examples of the abovementioned unsaturated aliphatic hydrocarbons with 2 to 10 carbon atoms which have one carbon-carbon triple bond include acetylene, propyne, 1-butyne, 2-butyne, 1-pentyne, 2-pentyne, 3-methyl-1-butyne, 3,3-dimethyl-1-butyne, 1-hexyne, 2-hexyne, 1-heptyne, 1-octyne, 1-nonyne, 1-decyne and 5-decyne. Examples of the abovementioned unsaturated aliphatic hydrocarbons with 3 to 10 carbon atoms which have two carbon-carbon double bonds include 1,2-propadiene (trivial name: allene), 1,3-butadiene, 2-methyl-1,3-butadiene (trivial name: isoprene), 2,3-dimethyl-1,3-butadiene, 1,3-pentadiene, 1,4-pentadiene, 1,5-hexadiene and 1,3-cyclohexadiene. Examples of dialkenyl ethers with 4 to 10 carbon atoms which have two carbon-carbon double bonds include diallyl ether and dibutenyl ether.

Furthermore, if an organic solvent is used in the abovementioned methods, a silphenylenesilalkylene polymer with a higher molecular weight can be manufactured. Concrete examples of organic solvents which can be used include aromatic hydrocarbon solvents such as toluene and xylene, etc.,; aliphatic hydrocarbon solvents such as hexane, heptane, octane and nonane, etc.; alicyclic hydrocarbon solvents such as cyclohexane, cycloheptane and cyclooctane, etc.; fluorine-containing aromatic hydrocarbon solvents such as trifluoromethylbenzene, 1,3-bis(trifluoromethyl)benzene and methylpentafluorobenzene, etc.; ether type compounds such as diethyl ether, dibutyl ether, phenylmethyl ether and tetrahydrofuran, etc.; dialkylene glycol dialkyl ethers such as diethylene glycol dibutyl ether and dipropylene glycol diethyl ether, etc.; and chlorinated hydrocarbons such as dichloromethane, 1,2-dichloroethane, 1,1,2,2-tetrachloroethane, chloroform, 1,1,1-trichloroethane, carbon tetrachloride, monochlorobenzene and dichlorobenzene, etc.

There are no particular restrictions on the reaction conditions; in cases where the hydrosilylation polymerization reaction is performed at ordinary pressure, the reaction temperature may range from room temperature to the boiling points of the abovementioned silphenylene and silicon compound, or to the boiling point of the organic solvent used. Furthermore, the hydrosilylation polymerization reaction can also be performed under pressurization. Moreover, in the abovementioned methods, an aliphatic hydrocarbon with 2 to 10 carbon atoms which has one carbon-carbon double bond per molecule may also be added during the hydrosilylation polymerization reaction. Examples of such aliphatic hydrocarbons include ethylene, propylene, 1-hexene, 1-octene and 1-decene.

The coating composition of the present invention comprises the aforementioned silphenylenesilalkylene polymer. It is desirable that the coating material of the present invention be used in a form in which the silphenylenesilalkylene polymer is dissolved in an organic solvent. Organic solvents which can be used include hydrocarbon solvents which are liquid at room temperature. Concrete examples of such solvents include aromatic hydrocarbon solvents such as toluene and xylene, etc.,; aliphatic hydrocarbon solvents such as hexane, heptane, octane and nonane, etc.; alicyclic hydrocarbon solvents such as cyclohexane, cycloheptane and cyclooctane, etc.; fluorine-containing aromatic hydrocarbon solvents such as trifluoromethylbenzene, 1,3-bis(trifluoromethyl)benzene and methylpentafluorobenzene, etc.; and chlorinated hydrocarbons such as dichloromethane, 1,2-dichloroethane, 1,1,2,2-tetrachloroethane, chloroform, 1,1,1-trichloroethane, carbon tetrachloride, monochlorobenzene and dichlorobenzene, etc. It is desirable that the amount of organic solvent used be in the range of 20 to 10,000 parts by weight per 100 parts by weight of the silphenylenesilalkylene polymer. Furthermore, the coating material of the present invention may also contain various types of conventional universally known additives, as long as there is no deleterious effect on the object of the present invention. Examples of such additives include polydiorganosiloxane type friction adjusting agents such as polydimethylsiloxanes and polymethylphenylsiloxanes; silane coupling agent type adhesion improving agents such as aminoalkyltrialkoxysilanes, epoxy-functional alkoxysilanes, methacryloxypropyltrialkoxysilanes and vinyltrialkoxysilanes; inorganic fillers such as silica gel, colloidal silica, titanium oxide and alumina; and fluoro-resins which are insoluble in organic solvents, such as Teflon.

When the coating composition of the present invention comprises a silphenylenesilalkylene polymer dissolved in an organic solvent, the following advantages are obtained: a high-hardness coating film which has a low surface tension and which is superior in terms of transparency, water-repellent properties, heat resistance, weather resistance and mold release properties, etc., can be formed merely by volatilizing the solvent following coating, without using a curing catalyst, etc.

### EXAMPLES

Below, the present invention will be described in detail in terms of practical examples of application. In the practical examples, the contact angle of water was measured using a contact angle meter (manufactured by Kyowa Kaimen Kagaku K.K.), and the hardness of the coating film was measured by means of a pencil scratching test (JIS K5400).

### Example 1

A 10% iso-propanol solution of chloroplatinic acid was added to a mixed solution consisting of 37.1 g (0.1 mol) of 1,4-bis(phenylmethylvinylsilyl)phenylene expressed by the formula: 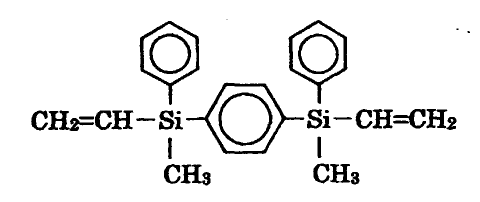 and 30 g of toluene, so that the content of the platinum metal itself in the reaction system was 30 ppm. Next, while this solution was agitated at 60°C, a mixed solution consisting of 19.0 g (0.098 mol) of 1,4-bis(dimethylsilyl)phenylene expressed by the formula: 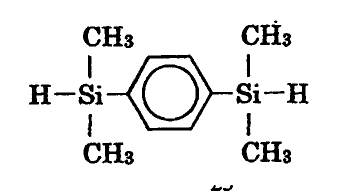 and 30 g of toluene was added dropwise, and this reaction mixture was heated to reflux for 2 hours. Afterward, the volatile component was removed under reduced pressure, thus producing 56.5 g of a solid reaction product. When the reaction product thus obtained was analyzed by GPC (gel permeation chromatography) using toluene as a solvent, Fourier transform infrared spectroscopic analysis (hereafter referred to as "FT-IR"), ¹³C-nuclear magnetic resonance spectroscopic analysis (hereafter referred to as ¹³C-NMR) and ²⁹Si-NMR, it was ascertained that the reaction product was a silphenylenesilethylene polymer with a weight average molecular weight of approximately 22,000 which could be expressed by the following average composition formula: 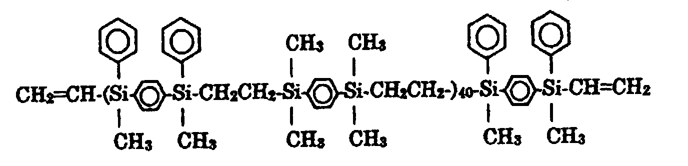 The softening point of this polymer was 70°C.

The silphenylenesilethylene polymer thus obtained was dissolved in toluene so that the concentration of the resulting solution was 30 wt %, and this solution was applied to a slide glass plate by dip coating. When this coated slide glass plate was dried for 10 minutes in an oven at 120°C, a transparent coating film was obtained. When the contact angle of this coating film with respect to water was measured, a value of 95° was obtained. Furthermore, when the pencil hardness was measured, the resulting value was H.

### Example 2

A silphenylenesilethylene polymer with a weight average molecular weight of approximately 10,000 which could be expressed by the average composition formula: 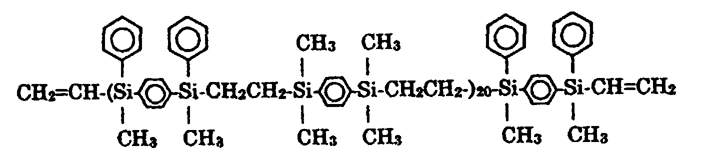 was obtained in the same manner as in Example 1, except that the amount of 1,4-bis(dimethylsilyl)phenylene used in Example 1 was changed to 18.4 g (0.095 mol). The softening point of this polymer was 65°C.

The silphenylenesilethylene polymer thus obtained was dissolved in toluene so that the concentration of the resulting solution was 30 wt %, and this solution was applied to a slide glass plate by dip coating. When this coated slide glass plate was dried for 10 minutes in an oven at 120°C, a transparent coating film was obtained. When the contact angle of this coating film with respect to water was measured, a value of 95° was obtained. Furthermore, when the pencil hardness was measured, the resulting value was H.

### Comparative Example 1

A silphenylenesilethylene polymer was obtained by the same manner as in Practical Example 1, except that 24.7 g (0.10 mol) of 1,4-bis(dimethylvinylsilyl)phenylene was used instead of the 1,4-bis(phenylmethylvinylsilyl)phenylene used in Practical Example 1. This silphenylenesilethylene polymer would not dissolve in organic solvents, and film formation was impossible. Accordingly, this polymer was unsuitable for use as a coating material.

The coating material of the present invention consists of the abovementioned silphenylenesilalkylene polymer, and is characterized by the fact that this coating material makes it possible to form a high-hardness coating film which is superior in terms of water-repellent properties.

## Claims

1. A silphenylenesilalkylene polymer containing principal chains having the general formula: 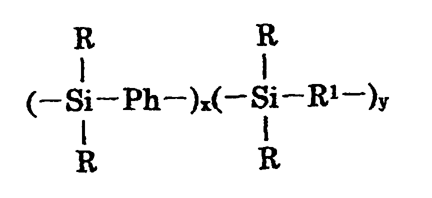 wherein each R is independently a monovalent hydrocarbon group having 1 to 10 carbon atoms, with the proviso that at least 20% of the R groups are phenyl; R¹ is an alkylene group or an alkyleneoxyalkylene group having 2 to 10 carbon atoms; Ph is a substituted or unsubstituted para-phenylene ring; and x and y are integers having a value of at least 1; and wherein the polymer has a weight average molecular weight of at least 1,000 and is a solid at 30°C.

2. The polymer according to claim 1, wherein 20 to 80 mole% of the R groups are phenyl.

3. The polymer according to claim 1, wherein R¹ is selected from the group consisting of ethylene, propylene, butylene, and hexylene.

4. The polymer according to claim 1, wherein Ph is unsubstituted para-phenylene.

5. The polymer according to claim 1, wherein the weight average molecular weight of the polymer is from 10,000 to 1,000,000.

6. The polymer according to claim 1, wherein the principal chains have the general formula: 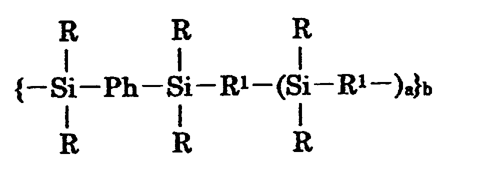 wherein R, R¹, and Ph are defined above; a is 0 or 1; and b is an interger having a value of at least 1.

7. The polymer according to claim 6, wherein the polymer has the general formula: 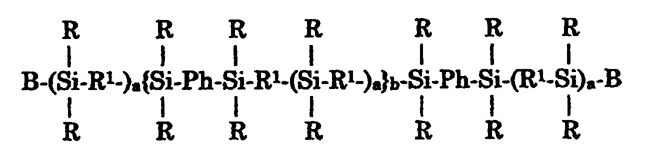 wherein R, R¹, Ph, a, and b are defined above; B is a hydrogen atom, a hydroxy group, an alkenyl group, or an alkenyloxyalkylene group having 2 to 10 carbon atoms.

8. The polymer according to claim 7, wherein B is a hydrogen atom or an alkenyl group.

9. A method of preparing a silphenylenesilalkylene polymer, said method comprising the step of polymerizing a disilphenylene having the formula: 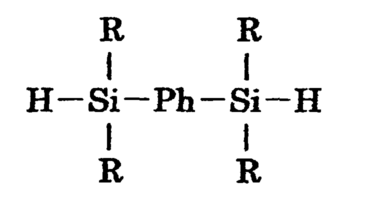 and a silicon compound having the formula: 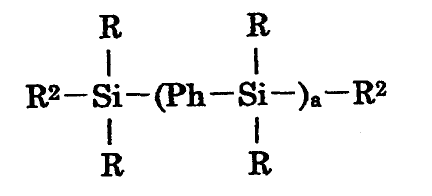 in the presence of a catalyst selected from the group consisting of hydrosilylation reaction catalysts and organic peroxides; wherein each R is independently a monovalent hydrocarbon group having 1 to 10 carbon atoms; Ph is a substituted or unsubstituted para-phenylene ring; R² is a alkenyl group, an alkenyloxyalkylene group, an unsaturated aliphatic hydrocarbon having 2 to 10 carbon atoms and containing one carbon-carbon triple bond, an unsaturated aliphatic hydrocarbon having 3 to 10 carbon atoms and containing two carbon-carbon double bonds, or a dialkenyl ether having 4 to 10 carbon atoms and containing two carbon-carbon double bonds; a is 0 or 1; and wherein at least 20% of the R groups in the silphenylenesilalkylene polymer are phenyl.

10. The method according to claim 9, wherein the catalyst is a hydrosilylation reaction catalyst comprising platinum.

11. The method according to claim 10, further comprising the steps of adding an adsorbent after the polymerizing step to adsorb the platinum catalyst and then removing the adsorbent containing the platinum catalyst from the polymer.

12. The method according to claim 9, wherein the polymerization is carried out in an organic solvent.

13. The method according to claim 9, further comprising the step of adding during the polymerization reaction an aliphatic hydrocarbon having 2 to 10 carbon atoms and containing one carbon-carbon double bond per molecule.

14. A method of preparing a silphenylenesilalkylene polymer, said method comprising the step of polymerizing an unsaturated compound selected from the group consisting of a disilphenylene having the general formula: 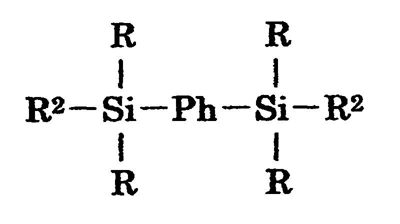 an unsaturated aliphatic hydrocarbon having 2 to 10 carbon atoms and containing one carbon-carbon triple bond, an unsaturated aliphatic hydrocarbon having 3 to 10 carbon atoms and containing two carbon-carbon double bonds, and a dialkenyl ether having 4 to 10 carbon atoms and containing two carbon-carbon double bonds; and a silicon compound having the formula: 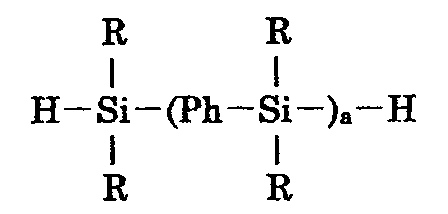 in the presence of a hydrosilylation reaction catalyst; wherein each R is independently a monovalent hydrocarbon group having 1 to 10 carbon atoms; Ph is a substituted or unsubstituted para-phenylene ring; R² is a alkenyl group, an alkenyloxyalkylene groups an unsaturated aliphatic hydrocarbon having 2 to 10 carbon atoms and containing one carbon-carbon triple bond, an unsaturated aliphatic hydrocarbon having 3 to 10 carbon atoms and containing two carbon-carbon double bonds, or a dialkenyl ether having 4 to 10 carbon atoms and containing two carbon-carbon double bonds; a is 0 or 1; and wherein at least 20% of the R groups in the silphenylenesilalkylene polymer are phenyl.

15. The method according to claim 14, wherein the catalyst comprises platinum.

16. The method according to claim 14, further comprising the steps of adding an adsorbent after the polymerizing step to adsorb the platinum catalyst and then removing the adsorbent containing the platinum catalyst from the polymer.

17. The method according to claim 14, wherein the polymerization is carried out in an organic solvent.

18. The method according to claim 14, further comprising the step of adding during the polymerization reaction an aliphatic hydrocarbon having 2 to 10 carbon atoms and containing one carbon-carbon double bond per molecule.

19. A coating composition comprising the silphenylenesilalkylene polymer according to any of claims 1 to 8.
